# FASCICULE DE BREVET EUROPEEN

(11) **EP 1 261 557 B1**
(45) Date de publication et mention de la délivrance du brevet: **18.11.2009**
(21) Numéro de dépôt: 01913947.6
(22) Date de dépôt: 07.03.2001
(51) Int. Cl.: C03C 17/34, B05D 7/24

(54) **SUBSTRAT TRANSPARENT REVETU D'UNE COUCHE POLYMERE**
MIT EINER POLYMERSCHICHT BESCHICHTETES TRANSPARENTES SUBSTRAT
TRANSPARENT SUBSTRATE COATED WITH A POLYMER LAYER

(30) Priorité: 08.03.2000 FR 0002955
(43) Date de publication de la demande: 04.12.2002
(73) Titulaire: SAINT-GOBAIN GLASS FRANCE, 92400 Courbevoie (FR)
(72) Inventeur: GANDON, Christophe, F-75019 Paris (FR)
(74) Mandataire: Muller, René
(86) Numéro de dépôt international: PCT/FR2001/000677
(87) Numéro de publication internationale: WO 2001/066481

(56) Documents cités:
- EP-A- 0 226 193
- WO-A-97/45209
- US-A- 4 465 738
- CLARK R J: "VAPOR PRIMED AND DEPOSITED CONFORMAL COATING" IBM TECHNICAL DISCLOSURE BULLETIN,US,IBM CORP. NEW YORK, vol. 20, no. 3, 1 août 1977 (1977-08-01), pages 945-946, XP002046863 ISSN: 0018-8689
- WASHO B D: "adhesion of tetrafluorethylene to substrate" IBM TECHNICAL DISCLOSURE BULLETIN., vol. 20, no. 12, mai 1978 (1978-05), page 5233 XP002153305 IBM CORP. NEW YORK., US ISSN: 0018-8689

## Description

L'invention concerne les substrats transparents, en polymère organique ou plus particulièrement en verre, en silice ou en vitrocéramique, que l'on munit d'au moins une couche à base de polymère pour leur conférer une fonctionnalité donnée. Elle concerne aussi les substrats minéraux transparents. Ce type de couche peut par exemple servir à protéger mécaniquement ou chimiquement un revêtement sous-jacent plus fragile, remplir une fonction optique, interférentielle ou modifier les propriétés de surface du substrat sur lequel il est déposé.

Son épaisseur peut notamment varier de quelques nanomètres à quelques microns, elle est généralement sub-micronique quand elle doit jouer le rôle de couche mince interférentielle.

Le dépôt de ce type de couche a fait l'objet de différentes études. La première voie consiste à la déposer à pression atmosphérique, le précurseur de la couche (monomère, prépolymère) étant utilisé en phase liquide. Ce choix présente un certain nombre d'inconvénients liés à l'utilisation de solvants : il peut rester des traces résiduelles de solvant dans la couche, le solvant doit être retraité/recyclé, l'épaisseur de la couche n'est pas très facile à contrôler. Enfin, il n'est pas toujours simple de trouver le solvant apte à mouiller correctement le substrat à revêtir.

Une seconde voie a alors consisté à déposer la couche sous vide : on vaporise le précurseur puis on le projette sous pression réduite sur le substrat. Le précurseur polymérise ensuite soit spontanément, soit sous l'effet d'un traitement spécifique, notamment un traitement thermique, à l'aide d'un rayonnement infrarouge par exemple, ou un traitement par ultraviolets ou par un bombardement d'électrons. Cette technique présente de nombreux avantages par rapport à la précédente : plus de solvant à retraiter, des couches contenant moins d'impuretés. On peut généralement mieux en contrôler l'épaisseur, tout particulièrement dans la gamme allant de 10 nm à 1 micromètre.. Elle permet en plus d'utiliser des réactifs de départ sensibles à l'eau ou à l'oxygène, ou d'utiliser des associations de réactifs à très forte réactivité et/ou difficiles à mélanger de façon homogène, qui sont peu ou pas miscibles. En outre, on peut inscrire le dépôt dans une opération de fabrication d'empilements multicouches sur une même ligne de dépôt sous vide, sans interruption dans la fabrication. Différents modes de réalisation de ces techniques sont décrits notamment dans les brevets US-5 260 095, EP-340 935, EP-339 844 et EP-733 919. Cependant elle n'est pas dénuée de tout inconvénient non plus : les couches de polymère ainsi déposées tendent à présenter une résistance mécanique insuffisante, elles tendent à se délaminer, et cela de façon d'autant plus prononcée qu'elles ont une épaisseur sub-micronique et/ou quand elles sont à base de polymère fluoré ou siliconé.

On connaît par le document WO 97 45209 un substrat revêtu d'une précouche d'adhésion organosilane déposée sous vide et une couche de polymèredéposée sous vide, l'épaisseur de la couche polymère étant au moins cinq fois plus importante que l'épaisseur de la pré couche.

L'invention a alors pour but de remédier à cet inconvénient, notamment en améliorant la qualité des couches de polymère déposées sous vide, notamment sur le plan mécanique.

L'invention a tout d'abord pour objet un substrat transparent revêtu sur au moins une de ses faces d'une couche de polymère déposée sous vide, ladite couche de polymère étant munie d'une précouche d'adhésion organique ou organo-minérale.

Au sens de l'invention, la précouche d'adhésion et la couche de polymère sont en contact direct l'une avec l'autre. Par contre, il peut y avoir un revêtement intermédiaire constitué d'une ou plusieurs couches, entre le substrat et la précouche d'adhésion.

Ladite précouche d'adhésion est déposée sous vide comme la couche de polymère, par une technique analogue.

Sa présence permet de renforcer considérablement l'interface entre le substrat éventuellement déjà muni d'un revêtement et la couche de polymère, en présentant une double affinité chimique avec les deux matériaux en question. Avoir ainsi recours à une précouche s'est avéré très efficace pour augmenter la résistance à la délamination de la couche de polymère, notamment quand cette dernière a une épaisseur inférieure au micron, par exemple en dessous de 500 nm, c'est-à-dire quand la tendance à la délamination est la plus forte. Cela est très important, car c'est la gamme d'épaisseurs allant de quelques nanomètres à quelques centaines de nanomètres qui est utilisée quand la couche de polymère doit remplir un rôle optique. C'est également ce type d'épaisseur qu'on choisit, généralement, quand la couche est utilisée afin de modifier les propriétés de surface du substrat (par exemple pour lui conférer un caractère hydrophobe, hydrophile, anti-givre, anti-buée, ou lubrifiant par abaissement de son coefficient de frottement) ou en tant que couche pour nanolithogravure, couche piezo- ou pyro-électrique ou encore comme couche pour les sondes de gaz.

L'invention a ainsi privilégié l'association de deux couches aux rôles bien distincts : on a d'une part la couche de polymère dont on attend une propriété précise (par exemple un indice de réfraction particulièrement bas si on vient l'incorporer dans un empilement de couches antireflets ; un caractère hydrophile ou hydrophobe, ...). D'autre part, il y a sa précouche d'adhésion, beaucoup plus mince que la précédente, et dont le rôle est d'assurer une continuité sur le plan chimique entre deux matériaux en présence (polymère et substrat déjà revêtu ou non), en présentant une double affinité chimique vis-à-vis de ceux-ci. On peut ainsi modifier, adapter la composition chimique de la précouche d'adhésion, notamment en fonction du substrat à revêtir, sans avoir à toucher à la composition du polymère. On peut ainsi utiliser tout type de polymère, dans la mesure où ils peuvent réagir avec le matériau de la précouche, de la façon détaillée plus loin. Cette solution est nettement préférable à celle qui aurait consisté à chercher à modifier chimiquement la couche de polymère pour la rendre plus compatible avec son substrat, ce qui est beaucoup plus complexe et qui risquait d'entraîner des modifications dans les propriétés recherchées pour la couche de polymère.

Déposer la précouche sous vide selon l'invention est très avantageux. On peut ainsi déposer les deux couches l'une après l'autre sur la même ligne de dépôt, et on facilite ainsi l'ancrage de la couche de polymère sur sa précouche d'adhésion.

Préférentiellement, le substrat est du verre, sans exclure d'autres substrats minéraux du type vitrocéramique, silicium ou silice comme mentionné plus haut, ou des polymères organiques du type polyméthacrylate de méthyle PMMA, polyéthylène téréphtalate TET, le polyéthylène naphtalate PEN, polychlorure de vinyle PVC, polycarbonates PC, dérivés transparents du polyfluorures de vinylidène, "Téflon AF' commercialisé par la société Du Pont De Nemours, "Cytop" commercialisé par la société Asahi Glass). Le revêtement « intermédiaire » évoqué plus haut peut comprendre une ou plusieurs couches minérales du type oxyde métallique (SnO₂ TiO₂ WO₃, Nb₂O₅, ZnO, ...), nitrure métallique (TiN, ZrN, ...), métal (Ag, Al, Ti, acier) ou dérivés de silicium (oxyde, oxynitrure, oxycarbure ou nitrure de silicium). Il peut s'agir aussi de carbures de métal ou de silicium.

L'épaisseur de la couche de polymère est au moins cinq fois, notamment au moins dix fois plus importante que celle de la précouche d'adhésion.

Le fait que la précouche d'adhésion soit ainsi choisie bien plus fine que la couche de polymère peut se justifier de différentes façons : cette précouche peut effectivement être très fine, elle peut même être discontinue. Il peut d'ailleurs s'agir d'une monocouche, c'est-à-dire d'une seule couche de molécules liées notamment de façon covalente aux deux matériaux avec lesquels elle se trouve en contact. Très fine, elle reste « neutre » sur le plan optique, elle ne vient ainsi pas perturber optiquement le rôle de la couche de polymère quand celle-ci est destinée à agir interférentiellement sur l'optique du substrat, et, de façon générale, l'aspect du substrat. Quant à la couche de polymère, c'est d'elle dont on attend une performance donnée, que l'on ne peut atteindre qu'avec une épaisseur relativement significative.

Pour donner un ordre d'idée, on choisit généralement pour la couche de polymère une épaisseur de l'ordre de 5 nm à 5 µm, notamment 80 nm à 500 nm quand elle a plutôt un but optique et de 10 à 200 nm quand elle a plutôt pour but de modifier les propriétés de surface du substrat. On choisit une épaisseur de l'ordre de 0,2 à 10 nm, notamment de 0,5 à 2 nm pour la précouche d'adhésion.

On détaille dans un premier temps, de façon non limitative, la nature chimique de la couche de polymère et le type de précurseurs aptes à la constituer (« précurseur » signifie le monomère et/ou prépolymère utilisés comme produits de départ pour cette couche).

La couche de polymère est choisie de préférence dans un matériau obtenu à partir d'un précurseur appartenant à l'une au moins des familles suivantes : résine polyester insaturé, résine thiol-polyène, polyester acrylate, époxyacrylate, uréthane-acrylate, (l'acrylate pouvant être remplacé par le méthacrylate), polysiloxanes, polymères époxydes difonctionnels, polymères époxydes téléchéliques, éthers vinyliques.

Le polymère choisi peut être fluoré (en ajuster le taux permet notamment d'abaisser de façon contrôlée l'indice de réfraction de la couche et/ou d'en ajuster le degré d'hydrophobie).

Cette couche est de préférence obtenue à partir de précurseur(s) (éventuellement fluorés) ayant des fonctions acryliques réticulables, notamment par un mécanisme radicalaire. La réticulation peut être spontanée, ou provoquée par des rayonnements de type ultraviolets ou bombardement d'électrons, ou encore par traitement thermique (sous vide ou non).

Le précurseur peut être monofonctionnel comme le laurylacrylate, l'isodecylacrylate. Il peut être difonctionnel comme le polyéthylène glycol diacrylate, le 1-6-hexonediol-diacrylate, le bisphénol A époxyacrylate, des polysiloxanes à terminaisons vinyliques (comme les produits vendus sous l'appellation commerciale MCR-V41 et DMS-100 par la société Gelest, sous l'appellation Ebercryl 350 par la société Radcor). Il peut aussi s'agir de copolymères de siliconetrifluoropropylméthyl siloxane (comme le produit vendu sous l'appellation FMV-4031 par la société Gelest). Le précurseur peut aussi contenir trois fonctions réactives ou plus, comme les triacrylates, comme le dipenta errythritol penta-acrylate, le propoxylated glyceril triacrylate, le vinyl méthoxy-siloxane (par exemple le produit vendu sous l'appellation VMM-010 par la société Gelest).

Cette couche peut aussi être obtenue à partir de précurseurs présentant des fonctions de condensation, notamment des fonctions alcool, amide, amine, anhydride d'acide, ester, éther-oxyde, halogénure d'acide, nitride, carbylamine, isocyanate, thiocianate, peracide, acide thiol, acide amine, acide cétonique, acide sulfonique, groupe époxyde.

Généralement, la polymérisation/réticulation par condensation nécessite une étape de recuit. Leurs réactions forment des polyimides, polyurée, polyamides, polyuréthanes, polyesters (qui peuvent là encore être fluorés). Des exemples de précurseurs sont le pyromellitic dianhydride, le décaméthylènediamine, le diaminodiphényléther, le1,6 diisocyanatohexane, le trans 1,4cyclohexynene diisocyanate, le1,6 hexandiamine, le1,2 diaminocyclohexane, les polydiméthylsoloxanes porteurs de groupements silanol (comme le produit vendu sous la dénomination commerciale DMS-S12 par Gelest), qui peuvent en outre être fluorés (comme le produit vendu sous la dénomination FMS-9921 par Gelest). Il peut aussi s'agir de polyméthylsoloxanes porteurs de_groupements aminopropyle (comme le produit vendu sous la dénomination commerciale DMS-A11 par Gelest) ou porteurs de fonctions époxydes (comme le produit vendu sous la dénomination commerciale DMS-E01 par Gelest).

Un autre type de précurseurs correspond à ceux qu'il est possible d'obtenir in situ par la fragmentation thermique d'un composé initial, pour former des polymères de la famille des polyarylènes ou des polyarytènevinylènes (notamment ceux que l'on désigne usuellement sous les noms PPX-N, PPX-C et PPX-D pour les Parylènes respectivement non chloré, monochloré et dichloré) ou des copolymères de ces deux types de polymères. Ce composé initial peut être choisi parmi les composés suivants : le di-para-xylylène et les composés halogénés dérivés, le 4-trifluoroacetyl(2.2)paracyclophane, le 4-amino(2.2)paracyclophane, les alpha-dialoxylène-para-xylène dont le alpha, alpha-dichtoro-para-xytène (DCPX).

Comme évoqué plus haut, la composition de ces polymères, notamment leur taux éventuel en fonctions fluorées, permet de moduler certaines propriétés de la couche, notamment son indice de réfraction, qui peut par exemple être compris entre 1,75 et 1,29, notamment entre 1,42 et 1,30. Son hydrophobie peut également être ajustée de façon à présenter un angle de contact à l'eau supérieur à 90°, notamment supérieur à 105°.
On détaille maintenant de façon non limitative la nature chimique de la précouche d'adhésion et le type de composés à partir desquels elle est constituée préférentiellement.

Elle est faite, par exemple, essentiellement à partir d'un seul type (ou de plusieurs types) de molécules/composés dont au moins l'un d'eux présente au moins un groupement dit "B" réactif avec les précurseurs de la couche de polymère, et au moins un groupement dit "A" réactif avec le matériau sur lequel elle est déposée, notamment du verre ou un revêtement en oxyde métallique, du type SnO₂, en nitrure ou en carbure de métal ou de silicium, ou dérivé de silicium. On utilise aussi des molécules difonctionnelles qui vont pouvoir créer un véritable pont entre les deux matériaux, avec créations de liaisons solides avec ceux-ci liaisons. Avantageusement, on crée ainsi des liaisons covalentes entre la couche de polymère et sa précouche, et des liaisons covalentes ou un liguant entre la précouche et le matériau sur lequel elle est déposée.

Le groupement réactif A est de préférence sous la forme Me(OR)₃-mClm, avec m ≥ 1 et de préférence m = 3. Il peut aussi être sous la forme -MeCl4. Le métal Me peut par exemple être Si, Ti, Sn, Ge et est choisi en fonction du matériau sous-jacent à la précouche. S'il s'agit de verre, d'oxycarbure ou oxynitrure de silicium, on choisit par exemple Me = Si, ainsi, ce groupement réactif peut interagir avec les groupements Si-OH du verre ou de l'oxyde de silicium. De façon similaire, on choisit Me = Sn ou Si, si la précouche est déposée sur une couche à base de dérivé d'étain du type oxyde d'étain. On a alors formation de liaisons covalentes Si-O-Si ou Si-O-Sn ou Sn-O-Sn assurant un bon ancrage de la précouche.

Le groupement réactif B peut comporter les fonctions suivantes : fonctions alcènes (famille des acrylates, des méthacrylates, ...), alcynes (famille des acétyléniques), alcools, aldéhydres, amides, amines, anhydres d'acide, cétones, esters, éther-oxydes, halogénures d'acide, nitriles, carbylamines, isocyanates, thiocyanates, péracides, acides, thiolsacides aminés, acide cétoniques, et des acides sulfoniques ou de groupes époxdes, azoïques.

Des exemples de ces composés bifonctionnels (notamment des silanes bifonctionnels) sont énumérés ci-dessous sans caractère limitatif : l'allyldrichlorosilane, l'allylhexyldichlorosilane, méthacryloxypropyltrichlorosilane, 3-isocyanatopropyldimethylchlorosilane, hexadichlorosilane, divinyldichlorosilane, 2-cyanoethyltrichlorosilane, 3-acryloxypropyle trichlorosilane, acetoxypropylmethyldichlorosilane, allyltrichlorogermane, 3-(trichlorogermyl)propionylchloride, bi(carbomethoxyethyl)dichlorotin.

Bien sûr, la nature des groupements réactifs de type B doit être choisie en fonction de celle des précurseurs de la couche de polymère.

Avec le type de composé/molécule organique mentionné plus haut, la précouche d'adhésion selon l'invention peut établir des liaisons covalentes à la fois avec le matériau qui lui est sous-jacent et avec le matériau de la couche de polymère.

Selon une variante particulière de l'invention, la couche de polymère fait partie d'un empilement de couches minces, avec au moins une couche minérale du type oxyde métallique, dérivé de silicium, (ou un autre type de couche du type couche de polymère) au-dessus d'elle. Dans ce cas, on peut prévoir d'interposer entre la couche de polymère et la couche (minérale) supérieure éventuelle une fine surcouche d'adhésion organique ou organo-minérale. Cette surcouche peut être tout à fait similaire dans sa fonction, sa nature chimique, et son épaisseur que la précouche précédemment décrite.

L'association précouche/couche de polymère / surcouche / couche(s) additionnelle(s) éventuelle(s) peut trouver de nombreuses applications, outre les empilements associant couches de polymère et couches minérales du type oxyde.

La couche de polymère associée à sa précouche d'adhésion peuvent avoir des applications très variées : elle peut servir de couche de protection mécanique ou chimique, de couche barrière aux gaz ou aux liquides vis-à-vis du substrat porteur ou d'un revêtement sous-jacent, ou même de protection de rayonnements ultraviolets. Elle peut ainsi servir de revêtement d'encapsulation d'une couche ou d'un empilement de couches à fonction optique, thermique, électrique (pyro-électrique, piezo-électrique), électrochimique comme un système électrochrome, électroluminescent ou à cristaux liquides, ou encore d'une couche pour la nanolithogravure ou une couche pour les sondes de gaz.

La couche de polymère peut faire partie intégrante d'un revêtement/empilement de couches à fonction anti-solaire, bas-émissif, antireflet, décoratif, électrique ou électrochimique. Elle peut ainsi, dans le cas d'un revêtement anti-solaire ou bas-émissif utilisant une couche fonctionnelle au moins en argent, en nitrure métallique type TiN, ZrN ou en oxyde métallique dopé du type SnO₂ :F, servir de matériau diélectrique à rôle optique atténuant notamment la réflexion lumineuse induite par cette couche fonctionnelle. Dans un empilement antireflet alternant des couches à haut et bas indices de réfraction, elle peut jouer le rôle de la couche à bas indice, notamment quand elle est fluorée.

Dans un système électrique ou électrochimique, elle peut servir de couche d'isolation électrique. Elle peut au contraire être choisie conductrice électriquement et permettre une continuité électrique dans ces systèmes.

La couche de polymère peut aussi apporter une fonctionnalité par elle-même : elle peut, avec sa précouche, constituer un revêtement hydrophobe à effet anti-pluie, anti-buée, notamment si le polymère est fluoré. Elle peut aussi être choisie hydrophile à effet anti-buée. Elle peut aussi être choisie de façon à être anti-givre, oléophile ou lubrifiante. Elle peut aussi être choisie oléophobe.

Elle peut avoir une fonction décorative, seule ou en association avec d'autres couches, notamment en créant des irisations colorées par un choix adéquat de son épaisseur et de son indice de réfraction.

Elle peut aussi servir de couche hôte pour des colorants, teintures, des molécules au comportement optique non linéaire, à des cristaux liquides ou à des molécules fluorées.

Avantageusement, la couche de polymère et sa précouche (et éventuellement sa surcouche) sont transparentes, avec une très faible absorption lumineuse, voire une absorption lumineuse quasi-nulle. Comme mentionné plus haut, la précouche est de préférence si mince que son rôle optique est négligeable.

L'invention a également pour objet le procédé de fabrication du substrat revêtu décrit plus haut, consistant notamment à déposer la précouche d'adhésion et la couche de polymère consécutivement sur une même ligne de fabrication sous vide.

Quand ces couches sont associées à d'autres couches minérales, il est ainsi très avantageux que toutes les couches puissent être déposées successivement sur une même ligne de dépôt. Bien sûr, les couches de l'invention peuvent aussi être associées à d'autres couches de polymère, que l'on peut déposer sous vide comme celles-ci.

Les couches minérales qui se trouvent disposées sous la précouche et la couche de polymère selon l'invention peuvent être déposées sous vide ou non, notamment par pyrolyse, CVD, sol-gel pour les dépôts à pression atmosphérique, et par CVD plasma, pulvérisation ionique, évaporation, dépôt en phase vapeur, pulvérisation cathodique éventuellement assistée par champ magnétique pour les dépôts sous vide. Pour les éventuelles couches minérales au-dessus de la couche de polymère, on peut utiliser le même type de technique. Il est cependant préférable d'éviter la pulvérisation cathodique et la CVD plasma, qui risquent de détériorer la surcouche d'adhésion selon l'invention quand elle est utilisée.

Avantageusement, le procédé de fabrication de la précouche et de la couche de polymère comprend les étapes suivantes :
a) - injection sous forme vapeur du ou des composés/molécules utilisés pour faire la précouche sur le substrat, provoquant notamment une réaction au moins partielle dudit composé avec le matériau sur lequel il a été projeté (la projection sous forme vapeur peut devoir être précédée d'une étape de mise sous forme vapeur du composé solide/liquide dans les conditions normales de pression),
b) - injection sous forme vapeur des précurseurs de la couche de polymère sur ledit substrat, donc au-dessus des composés de la précouche (là encore, la projection peut devoir être précédée d'une étape de mise sous forme vapeur des précurseurs).
c) - polymérisation/réticulation des précurseurs et réaction au moins partielle desdits précurseurs de la couche de polymère avec les composés de la précouche à leur interface.

Cette double réaction peut être spontanée, effectuée sous vide . Elle peut être provoquée ou accélérée par un rayonnement du type ultraviolet, par un bombardement d'électrons ou un simple traitement thermique, du type rayonnement infrarouge.

Ce qui est intéressant de ce procédé, c'est que les dépôts des produits de départ peuvent être consécutifs, sans nécessiter de traitement intermédiaire particulier entre les deux projections (même si on peut y avoir recours optionnellement).

L'invention a également pour objet l'application du substrat décrit plus haut pour faire des vitrages pour le bâtiment ou les véhicules, notamment monolithiques (un seul substrat rigide), feuilletés ou multiples. Il peut s'agir de véhicules terrestres (voitures, trains), maritimes ou aériens. On peut aussi les utiliser pour faire tous types d'écrans de visualisation, des panneaux d'affichage, du mobilier urbain. On peut aussi opacifier le substrat, et l'utiliser comme miroir ou panneau de parement de façade du type allège.

L'invention sera décrite de façon plus détaillée ci-après à l'aide d'exemples non limitatifs.

Toutes les précouches d'adhésion et les couches de polymère des exemples sont déposées sous vide, par vaporisation des composés de dépôt, injections successives sur le substrat dans une enceinte sous pression réduite (par exemple (par exemple au plus de 50 torrs) puis un éventuel traitement destiné à favoriser la polymérisation de la couche de polymère et « l'accrochage» de la précouche à cette dernière. Les substrats sont des substrats de verre, silico-sodo-calcique clair, du type Planilux (verre commercialisé par Saint-Gobain Vitrage).

### EXEMPLE 1

Cet exemple a pour but la réalisation d'une couche de protection permanente d'une couche minérale relativement fragile, notamment vis-à-vis de l'oxydation, de la résistance à l'eau.

Le dispositif de dépôt est conforme à celui décrit dans la publication de W.F.Gorham : J. Polym. Sci.4, 3027 (1966) et dans le brevet CA 637 507.

Il s'agir d'un miroir, fait du substrat de verre muni d'une couche d'aluminium déposée par pulvérisation cathodique assistée par champ magnétique à l'aide d'une cible d'aluminium. La couche d'Al a une épaisseur de 50 nm.

On dépose sur la couche d'aluminium, selon l'invention, une précouche d'adhésion de la façon suivante : on projette sur le substrat déjà muni de la couche d'Al 5 µl d'acétoxypropylméthyldichlorosilane mis sous forme vapeur, dans une enceinte sous une pression de 0,1 torr à une température de 200°C.

On dépose consécutivement la couche de polymère de la façon suivante : on sublime 0,5 g de dichloro-di-p-xylène à 120°C sous une pression de 1 torr. La vapeur formée subit ensuite une fragmentation thermique à 650°C sous une pression de 0,5 torr. Les produits de fragmentation polymérisent spontanément sur le substrat à 25°C sous une pression de 0,1 torr.

Il est inutile d'opérer ensuite un post-traitement : les réactions entre le précurseur de la précouche et le substrat, la précouche et la couche de polymère et la polymérisation/réticulation de cette dernière se font spontanément à 25°C sans apport énergétique extérieur.

La couche de polymère obtenue est en polyparaxylylène (PPX-C). Elle a une épaisseur de 500 nm. La précouche a une épaisseur d'environ 3 nm (épaisseur déterminée par diffraction des rayons X sur un échantillon non recouvert de la couche de polymère)

On fait subir à cet empilement le test de BSN (brouillard salin neutre) dont le protocole est le suivant: les couches sont soumises à un brouillard aqueux contenant 50g/l de NaCl avec un pH de 7 et une température de 35°C. On termine le test lorsque des points de corrosion sont visibles à l'oeil sur la couche d'aluminium.

Le résultat à ce test est le suivant : des défauts apparaissent au bout de 10 jours, alors que des défauts apparaissent au bout de 5 jours seulement en supprimant la couche de polymère et sa précouche.

Un autre test a été réalisé en comparant le substrat revêtu selon l'invention au substrat réalisé à titre comparatif sans précouche: sans précouche, la couche de PPX-C se délamine totalement quand on l'immerge dans un bain de solvant en THF, ou en xylène, ou dans de l'eau bouillante ou dans un solvant aromatique chloré, et ceci en moins de 15 minutes. Par contre, avec sa précouche, la couche de PPX-C reste fermement adhérente au verre après 24 heures dans chacun de ces solvants.

On en conclut que grâce à la précouche d'adhésion, la couche de polymère en PPX adhère extrêmement bien au substrat verrier, bien que le PPX soit apolaire et non-ionique. (Sans précouche, au contraire, on a un phénomène de délamination locale de la couche de polymère. La couche de l'invention associée à sa précouche peut ainsi remplir efficacement son rôle de protection durable vis-à-vis des couches sous-jacentes.

L'invention permet ainsi l'utilisation de polymères de type PPX pour protéger des verres, tels quels, sans avoir à les modifier chimiquement.

La couche de PPX est transparente. On peut en diminuer la transmission lumineuse en ajoutant les colorants appropriés, par exemple pour diminuer un effet "miroir sans tain" éventuel.

### EXEMPLE 2

Cet exemple a pour but la réalisation d'une couche selon l'invention, qui peut par exemple avoir comme fonction la protection mécanique contre les éclats ou les spliures lors des phases de découpe du verre, ou contre l'abrasion pendant son transport.

Les dépôts se font directement sur le verre. Le dispositif de dépôt est par exemple décrit dans le brevet US-5 260 055 précité.

On dépose la précouche d'adhésion à partir de 10 µl de 3-acryloxypropyletrichlorosilane préalablement chauffé à 60°C sous 0,4 torr, dans une enceinte où se trouve le verre à revêtir et qui est à une pression de 0,05 torr.

On dépose consécutivement dans la même enceinte la couche de polymère à partir de 0,1 ml de CN 132 (CN 131) de Cray Valley (un oligomère de la famille des diacrylates aliphatiques) additionné de 0,5% en poids de résine d'Irgacure 1850 de Ciba, le mélange étant débarrassé de son oxygène et préchauffé à 350°C. L'Irgacure est une dénomination commerciale englobant les photoinitiateurs pour la polymérisation radicalaire de la société Ciba. Parmi ceux-ci, on peut mentionner le Bis(2,6-diméthoxybenzoyl)-2,4,4-triméthylpentylphosphineoxyde, le 1-hydroxy-cyclohexyl-phényl cétone. L'Irgacure 1850 est un mélange 50/50 de ces deux composés. (On peut aussi citer le Bis(2,4,6-triméthylbenzoyl)-phénylphosphineoxyde, qui est l'Irgacure 819 et le benzophénone, dont l'association avec le composé précédent est commercialisé sous la dénomination Irgacure 500.)

On effectue ensuite un post-traitement consistant à maintenir le substrat dans l'enceinte sous vide et à le soumettre au rayonnement d'une lampe à ultraviolets à vapeur de mercure.

On fait subir ensuite au substrat ainsi revêtu un test d'abrasion mécanique appelé test OPEL : il consiste à appliquer une charge de16,7 N sur un tampon de laine qui est animé d'un mouvement de va-et-vient à la surface du substrat. On évalue la résistance à la rayure de la couche en fonction du flou de celle-ci après le test. Le flou est d'autant plus élevé que les rayures sont nombreuses, le cas extrême étant la délamination de la couche. Le nombre de va-et-vient correspond au nombre de "cycles OPEL".

Pour une épaisseur de précouche d'environ 1 nm et une épaisseur de couche de polymère de respectivement 500 nm et 760 nm, les résultats au test OPEL sont regroupés dans le tableau 1 ci-dessous : (flou exprimé en %, sans unité)

**Tableau 1**

| **TEST OPEL** | **Exemple 2** couche polymère 500 nm | **Exemple 2** Couche polymère 760 nm |
|---|---|---|
| 0 cycle | 0,30 | 0,10 |
| 200 cycles | 0,35 | 0,25 |
| 400 cycles | 0,35 | 0,30 |
| 600 cycles | 0,35 | 0,45 |
| 800 cycles | 0,50 | 0,45 |
| 1000 cycles | 0,70 | 0,60 |

A titre de comparaison, des exemples 2 comparatifs ont été réalisés, avec la même couche de polymère mais sans précouche. Les résultats au test Opel sont indiqués dans le tableau 2 ci-dessous :

**Tableau 2**

| **TEST OPEL** | **Exemple 2 comparatif** Couche polymère 500 nm | **Exemple 2 comparatif** Couche polymère 750 nm |
|---|---|---|
| 0 cycle | 0,10 | 0,10 |
| 200 cycles | 0,85 | 0,90 |
| 400 cycles | Délamination | 2,20 |
| 600 cycles | Délamination | 2,25 |
| 800 cycles | Délamination | 2,10 |
| 1000 cycles | Délamination | 2,15 |

De ces deux tableaux, on voit que la présence de la précouche a un effet très bénéfique sur la résistance à la délamination de la couche de polymère : en son absence, les couches de polymère d'épaisseur 500 nm (et moins) ne sont pas assez résistantes. La précouche permet d'abaisser l'épaisseur minimale de la couche de polymère au delà de laquelle on n'a plus de délamination.

### EXEMPLE 3

Cet exemple a pour but la réalisation d'une couche hydrophobe et mécaniquement durable sur un vitrage muni d'un revêtement anti-solaire sous forme d'une couche d'oxyde d'étain dopé au fluor (SnO₂ :F) de 100 nm déposée par pyrolyse en phase vapeur (CVD) de façon connue :
➢ les dépôts se font avec le même dispositif de dépôt et de la même façon qu'à l'exemple 2, mais cette fois sur la couche de SnO₂ :F,
➢ on dépose la précouche d'adhésion en projetant 10 µl de 3-(trichlorogermyl)propionylchloride préalablement chauffé à 60°C sous 0,4torr,
➢ on dépose consécutivement la couche de polymère à partir de 0,05 ml 0,5% en poids de résine d'Irgacure 1850 de Ciba qui est un photoamorceur additionné à la résine pour permettre l'initiation de la polymérisation par rayonnement U.V.
➢ on effectue le même post-traitement qu'à l'exemple 2,
➢ on obtient une précouche de 0,7 nm épaisseur (déterminée par diffraction X sur un échantillon dépourvu de couche de polymère), et une couche de polymère de 360 nm.

Les résultats au test Opel décrit plus haut sont les suivants :
➢ l'angle de contact à l'eau est de 95°, et reste supérieur à 70° après que le substrat revêtu a subi le test Opel pendant 800 cycles.
➢ si on refait l'expérience en supprimant la sous-couche, l'angle de contact à l'eau initial est toujours de 95°. Par contre, après 800 cycles de test Opel, l'angle de contact à l'eau chute à une valeur inférieure à 35°, ce qui montre de façon indirecte la destruction/délamination de la couche de polymère.

En conclusion, l'invention a mis au point une solution simple et efficace au problème de l'insuffisance d'adhérence des polymères ou couches minces au verre, en utilisant un procédé sous vide. L'invention a permis d'accroître de façon significative la résistance à l'abrasion des polymères en couche mince, en dessous du micromètre. Cela ouvre la voie à une utilisation beaucoup plus massive de ce type de matériau, notamment comme couche de protection et/ou couche interférentielle à rôle optique sur des substrats de type verre et toutes les applications prémentionnées.

## Revendications

1. Substrat transparent revêtu sur au moins une de ses faces d'une couche de polymère déposée sous vide, ***caractérisé en ce que*** ladite couche de polymère est munie d'une précouche d'adhésion organique ou organo-minérale, déposée également sous vide, l'épaisseur de la couche de polymère étant au moins 5 fois plus importante que l'épaisseur de la pré-couche, la pré-couche d'adhésion ayant une épaisseur comprise entre 0,2 et 10 nm, notamment entre 0,5 et 2 nm, en étant éventuellement discontinue, la pré-couche d'adhésion et la couche de polymère étant substantiellement transparentes.

2. Substrat selon la revendication 1, ***caractérisé en ce qu'**il* est en verre, en silice, en silicium, en vitrocéramique ou en polymère organique.

3. Substrat selon l'une des revendications précédentes, ***caractérisé en ce que*** la précouche d'adhésion est déposée directement sur le substrat ou sur un revêtement intermédiaire, comprenant notamment une ou plusieurs couches minérales du type oxyde métallique, nitrure métallique, métal, dérivés du silicium du type oxyde, oxynitrure, oxycarbure ou nitrure de silicium.

4. Substrat selon l'une des revendications précédentes, ***caractérisé en ce que*** l'épaisseur de la couche de polymère est au moins 10 fois plus importante que l'épaisseur de la précouche d'adhésion.

5. Substrat selon l'une des revendications précédentes, ***caractérisé en ce que*** la couche de polymère a une épaisseur comprise entre 5 nm et 5 µm, notamment entre 80 et 500 nm ou entre 10 et 200 nm.

6. Substrat selon l'une des revendications précédents, ***caractérisé en ce que*** la couche de polymère est obtenue à partir d'au moins un précurseur appartenant à l'une ou au moins des familles de polymère suivantes : les résines polyester insaturé, les résines thiol-polyènes, polyester acrylates, époxy acrylate, uréthane acrylate, l'acrylate pouvant être remplacé par le méthacrylate, polysiloxanes, polymères époxydes difonctionnels ou les polymères époxydes téléchéliques, éthers vinyliques, lesdits polymères étant éventuellement fluorés, ou d'au moins un précurseur obtenu par fragmentation thermique in situ de composés initiaux du type di-para-xylylène et composés halogénés dérivés, notamment afin de former des polymères de la famille des polyarylènes et des polyarylèneveinylènes ou des copolymères de ces deux types de polymères.

7. Substrat selon l'une des revendications précédentes, ***caractérisé en ce que*** la couche de polymère est obtenue à partir de monomère(s) ou de prépolymère(s), ayant des fonctions acryliques réticulables, notamment par un mécanisme radicalaire, par des rayonnements ultraviolets, par bombardement d'électrons ou par traitement thermique, lesdits polymères étant éventuellement fluorés.

8. Substrat selon la revendication 7, ***caractérisé en ce que*** le monomère/prépolymère est monofonctionnel, comme le laurylacrylate, l'isodecylacrylate, difonctionnel, comme le polyethylène glycol diacrylate, le 1,6-hexanedio diacrylate, le bisphenol A époxy acrylate, les polysiloxanes à terminaisons vinyliques, les copolymères de siliconestrifluoropropylméthylsiloxane, ou avec au moins trois fonctions réactives comme les triacrylates, le dipentaerrythritol pentaacrylate, le propoxylated glyceril triacrylate, le vinylmethoxysiloxane.

9. Substrat selon l'une des revendications précédentes, ***caractérisé en ce que*** la couche de polymère est obtenue à partir de monomères ou de prépolymères, éventuellement fluorés, ayant des fonctions de condensation choisies parmi les fonctions suivantes : alcools, amides, amines, anhydres d'acide, esters, ether-oxydes, halogénures d'acide, nitriles, carbylamines, isocyanates, thiocyanates, péracides, acides, thiols, acides aminés, acides cétoniques et des acides sulfoniques ou des groupes époxyde, afin de former, après polymérisation/réticulation, notamment par traitement thermique, des polyimides, polyurée, polyamide, polyuréthane, polyesters.

10. Substrat selon la revendication 9, ***caractérisé en ce que*** le monomère/prépolymère est choisi parmi les composés suivants : Pyromellitic dianhydride, decamethylenediamine, diaminodiphenyl ether, le1,6 diisocyanatohexane, le trans 1,4cyclohexynene diisocyanate, le1,6 hexandiamine, le1,2 diaminocyclohexane, les polydiméthylsoloxanes_porteurs de groupements silanol qui peuvent en outre être fluorés, des_polyméthylsoloxanes porteurs de groupements aminopropyle ou porteurs_de fonctions époxydes.

11. Substrat selon l'une des revendications précédentes, ***caractérisé en ce que*** la couche de polymère est fluorée, avec un indice de réfraction compris entre 1,75 et 1,29, notamment entre 1,42 et 1,30 et/ou un angle de contact à l'eau supérieur à 90°, notamment d'au moins 105°.

12. Substrat selon l'une des revendications précédentes, ***caractérisé en ce que*** la précouche d'adhésion est faite à partir d'un seul type ou plusieurs types de molécules/composés dont au moins un présente au moins un groupement réactif "B" avec le monomère ou le prépolymère utilisé pour faire la couche de polymère, et au moins un groupement réactif "A" avec le matériau sur lequel elle est déposée, notamment du verre ou un revêtement en oxyde métallique, en nitrure ou en carbure de métal ou de silicium, ou en dérivé de silicium.

13. Substrat selon la revendication 12, ***caractérisé en ce que*** le groupement réactif avec le matériau sur lequel la précouche d'adhésion est déposée est sous la forme Me(OR)₃-mClm, avec m supérieur ou égal à 1, et notamment égal à 3, ou sous la forme MeCl₄, avec Me choisi parmi le silicium ou un métal du type Ti, Sn, Ge.

14. Substrat selon la revendication 12 ou la revendication 13, ***caractérisé en ce que*** le groupement réactif avec le monomère ou le prépolymère utilisé pour faire la couche de polymère est choisi parmi les fonctions suivantes : fonctions alcènes comme les acrylates ou les méthacrylates, alcynes comme les familles des acétyléniques, alcools, aldéhydres, amides, amines, anhydres d'acide, cétones, esters, éther-oxydes, halogénures d'acide, nitriles, carbylamines, isocyanates, thiocyanates, péracides, acides, thiolsacides aminés, acide cétoniques, et des acides sulfoniques ou de groupes époxdes, azoïques.

15. Substrat selon l'une des revendications précédentes, ***caractérisé en ce que*** la précouche d'adhésion établit des liaisons covalentes avec le matériau sur lequel elle est déposée, notamment du verre, une couche à base de dérivé de silicium, d'un carbure ou d'un nitrure de métal ou de silicium, ou d'un oxyde métallique du type SnO₂.

16. Substrat selon l'une des revendications précédentes, ***caractérisé en ce que*** la précouche d'adhésion établie des liaisons covalentes avec la couche de polymère.

17. Substrat selon l'une des revendications précédentes, ***caractérisé en ce que*** la couche de polymère est revêtue d'au moins une couche minérale du type oxyde métallique, dérivé de silicium et/ou un autre type de couche du type couche de polymère, avec à l'interface entre la couche de polymère et la couche au-dessus d'elle une surcouche d'adhésion organique ou organo-minérale.

18. Substrat selon l'une des revendications précédentes, ***caractérisé en ce que*** la couche de polymère et sa précouche d'adhésion constituent ou font partie d'un revêtement d'encapsulation, d'une couche ou d'un empilement de couches à fonction optique, thermique, électrique du type pyro-électrique ou piézo-électrique, ou électrochimique comme un système électrochrome, à cristaux liquides ou électroluminescent, ou encore d'une couche pour la nanolithogravure ou une couche pour des sondes de gaz.

19. Substrat selon l'une des revendications précédentes, ***caractérisé en ce que*** la couche de polymère avec sa précouche d'adhésion font partie d'un revêtement anti-solaire, bas-émissif, antireflet, décoratif, électrique, électrochimique.

20. Substrat selon l'une des revendications précédentes, ***caractérisé en ce que*** la couche de polymère avec sa précouche d'adhésion constituent un revêtement hydrophobe notamment à fonction anti-pluie, ou hydrophile notamment à fonction anti-buée, anti-givre, ou oléophile, ou lubrifiant, ou un revêtement oléophobe.

21. Procédé de fabrication du substrat selon l'une des revendications précédentes **caractérisé en ce que** le dépôt de la précouche d'adhésion et celui de la couche de polymère sont consécutifs sur une même ligne de fabrication sous vide.

22. Procédé de fabrication du substrat selon la revendication 21, ***caractérisé en ce qu'**il* comprend les étapes suivantes :
a) - injection sous forme vapeur du ou des composés précurseurs de la précouche d'adhésion sur le substrat, avec notamment une réaction au moins partielle dudit composé avec le matériau sur lequel il a été projeté,
b) - injection sous forme vapeur du ou des monomères /prépolymères précurseurs de la couche de polymère sur ledit substrat,
c) - polymérisation/réticulation du monomère/prépolymère de la couche de polymère et réaction au moins partielle dudit monomère/prépolymère avec le composé précurseur de la précouche à l'interface entre les deux couches, sous vide, notamment à l'aide d'un d'un traitement par rayonnement ultraviolet ou par un bombardement d'électrons ou d'un traitement thermique du type rayonnement infrarouge.

23. Application du substrat selon l'une des revendications 1 à 20 à la fabrication de vitrages monolithiques, feuilletés ou multiples, de panneaux de parement de façade du type allège, de miroirs, d'écrans de visualisation, de mobilier urbain.

## Claims

1. Transparent substrate coated on at least one of its faces with a polymer layer deposited under vacuum, **characterized in that** the said polymer layer is provided with an organic or organoinorganic adhesion prelayer, also deposited under vacuum, the thickness of the polymer layer being at least 5 times greater than the thickness of the prelayer, the adhesion prelayer having a thickness of between 0.2 and 10 nm, in particular between 0.5 and 2 nm, while optionally being discontinuous, the adhesion prelayer and the polymer layer being substantially transparent.

2. Substrate according to Claim 1, **characterized in that** it is made of glass, of silica, of silicon, of vitroceramic or of organic polymer.

3. Substrate according to either of the preceding claims, **characterized in that** the adhesion prelayer is deposited directly on the substrate or on an intermediate coating comprising in particular one or more inorganic layers of the following types: metal oxide, metal nitride, metal or silicon derivatives of the silicon oxide, silicon oxynitride, silicon oxycarbide or silicon nitride type.

4. Substrate according to one of the preceding claims, **characterized in that** the thickness of the polymer layer is at least 10 times greater than the thickness of the adhesion prelayer.

5. Substrate according to one of the preceding claims, **characterized in that** the polymer layer has a thickness of between 5 nm and 5 µm, in particular between 80 and 500 nm or between 10 and 200 nm.

6. Substrate according to one of the preceding claims, **characterized in that** the polymer layer is obtained from at least one precursor belonging to at least one of the following families of polymers: unsaturated polyester resins, thiolpolyene resins, polyester acrylates, epoxy acrylates, urethane acrylates, it being possible for the acrylate to be replaced by the methacrylate, polysiloxanes, difunctional epoxide polymers or telechelic epoxide polymers, or vinyl ethers, the said polymers optionally being fluorinated, or from at least one precursor obtained by thermal fragmentation in situ of starting compounds of the di-para-xylylene type and derived halogenated compounds, in particular in order to form polymers of the family of the polyarylenes and poly(arylene-vinylene)s or copolymers of these two types of polymers.

7. Substrate according to one of the preceding claims, **characterized in that** the polymer layer is obtained from monomer(s) or from prepolymer(s) having acrylic functional groups which can be crosslinked, in particular by a radical mechanism, by ultraviolet radiation, by electron bombardment or by heat treatment, the said polymers optionally being fluorinated.

8. Substrate according to Claim 7, **characterized in that** the monomer/prepolymer is monofunctional, such as lauryl acrylate or isodecyl acrylate, difunctional, such as polyethylene glycol diacrylate, 1,6-hexanediol diacrylate, bisphenol A epoxy acrylate, polysiloxanes with vinyl endings, or siliconetrifluoropropylmethylsiloxane copolymers, or with at least three reactive functional groups, such as triacrylates, dipentaerythritol pentaacrylate, propoxylated glyceryl triacrylate or vinylmethoxysiloxane.

9. Substrate according to one of the preceding claims, **characterized in that** the polymer layer is obtained from optionally fluorinated monomers or prepolymers having condensation functional groups chosen from the following functional groups: alcohols, amides, amines, acid anhydrides, esters, ethers, acid halides, nitriles, carbylamines, isocyanates, thiocyanates, peracids, acids, thiols, amino acids, ketone acids and sulphonic acids or epoxide groups, in order to form, after polymerization/crosslinking, in particular by heat treatment, polyimides, polyureas, polyamides, polyurethanes or polyesters.

10. Substrate according to Claim 9, **characterized in that** the monomer/prepolymer is chosen from the following compounds: pyromellitic dianhydride, decamethylenediamine, diaminodiphenyl ether, 1,6-diisocyanatohexane, trans-1,4-cyclohexynene diisocyanate, 1,6-hexanediamine, 1,2-diaminocyclohexane, polydimethylsiloxanes carrying silanol groups, which can additionally be fluorinated, or polymethylsiloxanes carrying aminopropyl groups or carrying epoxide functional groups.

11. Substrate according to one of the preceding claims, **characterized in that** the polymer layer is fluorinated, with a refractive index of between 1.75 and 1.29, in particular between 1.42 and 1.30, and/or a contact angle with water of greater than 90°, in particular of at least 105°.

12. Substrate according to one of the preceding claims, **characterized in that** the adhesion prelayer is made from a single type or several types of molecules/compounds, at least one of which exhibits at least one group "B" which is reactive with the monomer or the prepolymer used to prepare the polymer layer and at least one group "A" which is reactive with the material on which it is deposited, in particular glass or a coating made of metal oxide, of metal nitride, of metal carbide, of silicon nitride, of silicon carbide or of silicon derivative.

13. Substrate according to Claim 12, **characterized in that** the group which is reactive with the material on which the adhesion prelayer is deposited is in the form Me(OR)₃₋ₘClₘ, with m greater than or equal to 1 and in particular equal to 3, or in the form MeCl₄, with Me chosen from silicon or a metal of the Ti, Sn or Ge type.

14. Substrate according to Claim 12 or Claim 13, **characterized in that** the group which is reactive with the monomer or the prepolymer used to prepare the polymer layer is chosen from the following functional groups: alkene, such as acrylates or methacrylates, alkyne, such as the family of the acetylenics, alcohol, aldehyde, amide, amine, acid anhydride, ketone, ester, ether, acid halide, nitrile, carbylamine, isocyanate, thiocyanate, peracid, acid, thiol, amino acid, ketone acid and sulphonic acid functional groups or epoxide or azo groups.

15. Substrate according to one of the preceding claims, **characterized in that** the adhesion prelayer establishes covalent bonds with the material on which it is deposited, in particular glass or a layer based on a silicon derivative, on a metal carbide, on a metal nitride, on a silicon carbide or on a silicon nitride, or on a metal oxide of the SnO₂ type.

16. Substrate according to one of the preceding claims, **characterized in that** the adhesion prelayer establishes covalent bonds with the polymer layer.

17. Substrate according to one of the preceding claims, **characterized in that** the polymer layer is coated with at least one inorganic layer of the metal oxide or silicon derivative type and/or another type of layer of the polymer layer type, with, at the interface between the polymer layer and the layer above it, an organic or organoinorganic adhesion overlayer.

18. Substrate according to one of the preceding claims, **characterized in that** the polymer layer and its adhesion prelayer constitute or form part of a coating for the encapsulation of a layer or of a stack of layers with an optical function, thermal function, electrical function, of the pyroelectric or piezoelectric type, or electrochemical function, such as an electrochromic, liquid crystal or electroluminescent system, or of a layer for nanoscale lithographic etching or a layer for gas probes.

19. Substrate according to one of the preceding claims, **characterized in that** the polymer layer with its adhesion prelayer form part of a solar-protection, low-emissivity, antireflective, decorative, electrical or electrochemical coating.

20. Substrate according to one of the preceding claims, **characterized in that** the polymer layer with its adhesion prelayer constitute a hydrophobic coating, in particular with a rain-repellent function, or a hydrophilic coating, in particular with an antifogging or defrosting function, or an oleophilic coating, or a lubricating coating, or an oleophobic coating.

21. Process for the manufacture of the substrate according to one of the preceding claims, **characterized in that** the deposition of the adhesion prelayer and that of the polymer layer are consecutive on the same line for manufacture under vacuum.

22. Process for the manufacture of the substrate according to Claim 21, **characterized in that** it comprises the following stages:
a) - injection in vapour form of the precursor compound or compounds of the adhesion prelayer on the substrate with, in particular, an at least partial reaction of the said compound with the material over which it has been sprayed,
b) - injection in vapour form of the precursor monomer(s)/prepolymer(s) of the polymer layer over the said substrate,
c) - polymerization/crosslinking of the monomer/- prepolymer of the polymer layer and at least partial reaction of the said monomer/prepolymer with the precursor compound of the prelayer at the interface between the two layers, under vacuum, in particular using treatment with ultraviolet radiation or by electron bombardment or heat treatment of the infrared radiation type.

23. Application of the substrate according to one of Claims 1 to 20 in the manufacture of monolithic, laminated or multiple glazing assemblies, of facade facing panels of the type which has been reduced in weight, of mirrors, of display screens or of street furniture.

## Patentansprüche

1. Substrat, das transparent und auf mindestens einer Seite mit einer unter Vakuum aufgebrachten Polymerschicht beschichtet ist, **dadurch gekennzeichnet, dass** die Polymerschicht mit einer ebenfalls unter Vakuum aufgebrachten organischen oder organisch-anorganischen haftfähigen Vorschicht versehen ist, die Dicke der Polymerschicht mindestens 5 Mal größer als diejenige der Vorschicht ist, die haftfähige Vorschicht eine Dicke von 0,2 bis 10 nm und insbesondere zwischen 0,5 und 2 nm besitzt, wobei sie gegebenenfalls diskontinuierlich ist, und die haftfähige Vorschicht und die Polymerschicht im Wesentlichen transparent sind.

2. Substrat nach Anspruch 1, **dadurch gekennzeichnet, dass** es aus Glas, Siliciumdioxid, Silicium, Glaskeramik oder einem organischen Polymer besteht.

3. Substrat nach einem der vorhergehenden Ansprüche, **dadurch gekennzeichnet, dass** die haftfähige Vorschicht direkt auf das Substrat oder auf eine Zwischenbeschichtung, die insbesondere eine oder mehrere anorganische Schichten vom Typ Metalloxid, Metallnitrid, Metall und Siliciumverbindungen vom Typ Siliciumoxid, -nitridoxid, -carbidoxid oder-nitrid umfasst, aufgebracht worden ist.

4. Substrat nach einem der vorhergehenden Ansprüche, **dadurch gekennzeichnet, dass** die Dicke der Polymerschicht mindestens 10 Mal größer als die Dicke der haftfähigen Vorschicht ist.

5. Substrat nach einem der vorhergehenden Ansprüche, **dadurch gekennzeichnet, dass** die Dicke der Polymerschicht 5 nm bis 5 µm und insbesondere zwischen 80 und 500 nm oder zwischen 10 und 200 nm beträgt.

6. Substrat nach einem der vorhergehenden Ansprüche, **dadurch gekennzeichnet, dass** die Polymerschicht ausgehend von mindestens einem Vorläufer, der zu mindestens einer der folgenden Polymerklassen gehört: ungesättigten Polyesterharzen, Thiol-Polyen-Harzen, Polyesteracrylaten, Epoxyacrylat, Urethanacrylat, Acrylat, das durch Methacrylat ersetzt sein kann, Polysiloxanen, bifunktionellen Epoxidpolymeren oder telechelischen Epoxidpolymeren, Vinylethern und diesen Polymeren, die gegebenenfalls fluoriert sind, oder von mindestens einem Vorläufer, der durch thermische in-situ-Fragmentierung von Ausgangsverbindungen vom Typ Di-para-xylylen und abgeleiteten Halogenverbindungen, insbesondere, um Polymere der Familie der Polyarylene und Polyarylenvinylene oder Copolymere aus diesen zwei Polymertypen zu bilden, erhalten worden ist.

7. Substrat nach einem der vorhergehenden Ansprüche, **dadurch gekennzeichnet, dass** die Polymerschicht ausgehend von einem oder mehreren Monomeren oder Präpolymeren mit Acrylfunktionen, die, insbesondere durch einen radikalischen Mechanismus, Ultraviolettstrahlung, Elektronenbombardement oder Wärmebehandlung, vernetzbar sind, erhalten worden ist, wobei diese Polymeren gegebenenfalls fluoriert sind.

8. Substrat nach Anspruch 7, **dadurch gekennzeichnet, dass** das Monomer/Präpolymer monofunktionell wie Laurylacrylat und Isodecylacrylat, bifunktionell wie Polyethylenglykoldiacrylat, 1,6-Hexandioldiacrylat, Bisphenol-A-epoxyacrylat, Polysiloxane mit endständigen Vinylfunktionen und Silicontrifluorpropylmethylsiloxancopolymere oder mit mindestens drei reaktiven Funktionen wie Triacrylate, Dipentaerythritpentaacrylat, propoxyliertes Glyceriltriacrylat und Vinylmethoxysiloxan ist.

9. Substrat nach einem der vorhergehenden Ansprüche, **dadurch gekennzeichnet, dass** die Polymerschicht ausgehend von gegebenenfalls fluorierten Monomeren oder Präpolymeren mit Kondensationsfunktionen, die aus folgenden Funktionen ausgewählt sind: Alkoholen, Amiden, Aminen, Säureanhydriden, Estern, Etheroxiden, Säurehalogeniden, Nitrilen, Carbylaminen, Isocyanaten, Thiocyanaten, Persäuren, Säuren, Thiolen, Säureaminen, Ketonsäuren und Sulfonsäuren oder Epoxidgruppen, um nach Polymerisation/Vernetzung, insbesondere durch Wärmebehandlung, Polyimide, Polyharnstoff, Polyamid, Polyurethan und Polyester zu bilden, erhalten worden ist.

10. Substrat nach Anspruch 9, **dadurch gekennzeichnet, dass** das Monomer/Präpolymer aus folgenden Verbindungen ausgewählt ist: Pyromellinsäuredianhydrid, Decamethylendiamin, Diaminodiphenylether, 1,6-Diisocyanatohexan, trans-1,4-Cyclohexynendiisocyanat, 1,6-Hexandiamin, 1,2-Diaminocyclohexan, Polydimethylsiloxanen, die Silanolgruppen tragen, die außerdem fluoriert sein können, und Polymethylsiloxanen, die Aminopropylgruppen oder Epoxidgruppen tragen.

11. Substrat nach einem der vorhergehenden Ansprüche, **dadurch gekennzeichnet, dass** die Polymerschicht fluoriert ist und einen Brechungsindex von 1,75 bis 1,29, insbesondere zwischen 1,42 und 1,30, und/oder einen Kontaktwinkel mit Wasser von über 90°, insbesondere mindestens 105°, besitzt.

12. Substrat nach einem der vorhergehenden Ansprüche, **dadurch gekennzeichnet, dass** die haftfähige Vorschicht aus einem einzigen Typ oder mehreren Typen von Molekülen/Verbindungen hergestellt ist, wovon mindestens einer mindestens eine "B"-Gruppe, die mit dem Monomer oder Präpolymer, das zur Herstellung der Polymerschicht verwendet wird, reaktiv ist, und mindestens eine "A"-Gruppe, die mit dem Material, auf welchem sie aufgebracht worden ist, insbesondere Glas oder eine Beschichtung aus einem Oxid, Nitrid bzw. Carbid eines Metalls oder des Siliciums oder einer Siliciumverbindung, reaktiv ist, aufweist.

13. Substrat nach Anspruch 12, **dadurch gekennzeichnet, dass** die Gruppe, die mit dem Material reaktiv ist, auf welchem die haftfähige Vorschicht aufgebracht ist, in Form von Me(OR)₃-mClₘ, mit m größer oder gleich 1 und insbesondere gleich 3, oder in Form von MeCl₄, mit Me, das aus Silicium oder einem Metall vom Typ Ti, Sn und Ge ausgewählt ist, vorliegt.

14. Substrat nach Anspruch 12 oder 13, **dadurch gekennzeichnet, dass** die Gruppe, die mit dem Monomer oder Präpolymer, das zur Herstellung der Polymerschicht verwendet wird, reaktiv ist, aus folgenden Funktionen ausgewählt ist: Alkenfunktionen wie Acrylaten oder Methacrylaten, Alkinen wie die Familien der acetylenischen, Alkoholen, Aldehyden, Amiden, Aminen, Säureanhydriden, Ketonen, Estern, Etheroxiden, Säurehalogeniden, Nitrilen, Carbylaminen, Isocyanaten, Thiocyanaten, Persäuren, Säuren, Aminothiolsäuren, Ketonsäuren und Sulfonsäuren oder Epoxid- und Azogruppen.

15. Substrat nach einem der vorhergehenden Ansprüche, **dadurch gekennzeichnet, dass** die haftfähige Vorschicht mit dem Material, insbesondere Glas und eine Schicht auf der Basis einer Siliciumverbindung, eines Carbids bzw. eines Nitrids eines Metalls oder des Siliciums oder eines Metalloxids vom Typ SnO₂, auf welchem sie aufgebracht ist, kovalente Bindungen ausbildet.

16. Substrat nach einem der vorhergehenden Ansprüche, **dadurch gekennzeichnet, dass** die haftfähige Vorschicht kovalente Bindungen mit der Polymerschicht ausbildet.

17. Substrat nach einem der vorhergehenden Ansprüche, **dadurch gekennzeichnet, dass** die Polymerschicht mit mindestens einer anorganischen Schicht vom Typ Metalloxid, Siliciumverbindung und/oder einem anderen Schichttyp vom Typ Polymerschicht beschichtet ist, wobei sich in der Grenzfläche zwischen der Polymerschicht und der Schicht über dieser eine organische oder organisch-anorganische haftfähige Deckschicht befindet.

18. Substrat nach einem der vorhergehenden Ansprüche, **dadurch gekennzeichnet, dass** die Polymerschicht und ihre haftfähige Vorschicht eine Umkapselungsbeschichtung einer Schicht oder eines Schichtaufbaus mit optischer, thermischer, elektrischer vom Typ pyroelektrischer bzw. piezoelektrischer oder elektrochemischer Funktion wie eines elektrochromen, eines elektrolumineszenten oder eines Flüssigkristallsystems oder auch einer Schicht für die Nanolithographie oder einer Schicht für Gassonden bilden oder ein Bestandteil davon sind.

19. Substrat nach einem der vorhergehenden Ansprüche, **dadurch gekennzeichnet, dass** die Polymerschicht mit ihrer haftfähigen Vorschicht Bestandteil einer vor Sonne schützenden, niedrig emittierenden, entspiegelnden, dekorativen, elektrischen und elektrochemischen Beschichtung ist.

20. Substrat nach einem der vorhergehenden Ansprüche, **dadurch gekennzeichnet, dass** die Polymerschicht mit ihrer haftfähigen Vorschicht eine hydrophobe Beschichtung, insbesondere mit Regen abweisender Funktion, eine hydrophile, insbesondere mit Beschlag abweisender und enteisender Funktion, eine oleophile, gleitfähige oder oleophobe Beschichtung bildet.

21. Verfahren zur Herstellung des Substrats nach einem der vorhergehenden Ansprüche, **dadurch gekennzeichnet, dass** die haftfähige Vorschicht und die Polymerschicht in ein und derselben Produktionslinie nacheinander unter Vakuum aufgebracht werden.

22. Verfahren zur Herstellung des Substrats nach Anspruch 21, **dadurch gekennzeichnet, dass** es die Stufen:
a) Blasen der dampfförmigen Vorläuferverbindung/en der haftfähigen Vorschicht auf das Substrat mit insbesondere einer wenigstens teilweisen Reaktion dieser Verbindung mit dem Material, auf welches sie geblasen worden ist,
b) Blasen des/der dampfförmigen Vorläufermonomeren/-präpolymeren der Polymerschicht auf das Substrat und
c) Polymerisation/Vernetzung des Monomeren/Präpolymeren der Polymerschicht und wenigstens teilweise Reaktion dieses Monomeren/Präpolymeren mit der Vorläuferverbindung der Vorschicht an der Grenzfläche zwischen den beiden Schichten unter Vakuum, insbesondere mit Hilfe einer Behandlung durch Ultraviolettstrahlung oder ein Elektronenbombardement oder einer Wärmebehandlung vom Typ Infrarotbestrahlung, umfasst.

23. Verwendung des Substrats nach einem der Ansprüche 1 bis 20 zur Herstellung von monolithischen, Verbund- oder Mehrfachgläsern, Fassadenverkleidungsplatten vom Typ Brüstungsscheiben, Spiegeln, Bildschirmen und Stadtmöblierungen.
